# EUROPEAN PATENT APPLICATION

(11) **EP 4 818 126 A1**
(43) Date of publication of application: **07.10.2026**
(21) Application number: 25168623.4
(22) Date of filing: 04.04.2025
(51) Int. Cl.: C02F 1/44, B01D 53/14, C02F 1/461, C02F 1/66, C02F 101/10, C02F 103/18

(54) **PURIFICATION OF A USED SCRUBBING LIQUID COMPRISING HYDROGEN CARBONATE (HCO3-)**

(71) Applicant: Estech A/S, 5700 Svendborg (DK)
(72) Inventor: Jakobsen, Jan Stougaard, 5700 Svendborg (DK); Lindner Bonde, Jacob, 5700 Svendborg (DK)
(74) Representative: Dragsted Partners A/S

(57) **Abstract**

A method of purifying an aqueous scrubbing liquid (10), comprising dissolved alkali metal cations (M⁺), hydrogen carbonate ions (HCO₃⁻), and sulfate ions (SO₄²⁻). The pH of the aqueous scrubbing liquid is in the range 7.0 to 9.0. The method comprises the step of filtering the aqueous scrubbing liquid (10) to be purified in a first filtration step to provide a first permeate (11), the relative content of sulfate ions (SO₄²) in the first permeate (11) being decreased, and a first retentate (12), the relative content of sulfate ions (SO₄²⁻) in the retentate (12) being increased.

## Description

### TECHNICAL FIELD

The present invention relates to a method of purifying a used scrubbing liquid, which has been used in scrubbing a gas, such as flue gas, comprising carbon dioxide (CO₂).

### BACKGROUND

Carbon dioxide (CO₂) is a gas that when emitted into the atmosphere is damaging to the climate as it contributes to the green-house effect and rise in global temperature. It is for example produced as a byproduct when fossil fuel, e.g. coal, gasoline or diesel, is burned. Coal- and gas-fired power plants accounts for a large share of CO₂ emissions. Further, also large vehicles with combustion engines, like trucks and ships, accounts for a large share of CO₂ emissions. It is a goal for many sectors to lower carbon dioxide emissions.

Emitted gases resulting from combustion and comprising CO₂ are typically denoted flue gases or exhaust gases. Depleting such emitted gases of CO₂ by lowering the CO₂ content in the emitted gases, can be done by so called scrubbing of the gases, i.e. removing the CO₂ from the gas stream by absorbing/dissolving CO₂ in a liquid. The primary application for CO₂ scrubbing is for removal of CO₂ from the exhaust (i.e. flue gas) of coal- and gas-fired power plants, downstream of a power station, before the gas is released into the atmosphere. By using such a process, it would be possible to significantly lower the CO₂ emissions involved in coal-fired power generation. In the chemical industry, CO₂ scrubbing is used to separate CO₂ from natural gas. Further, it would also be of interest to removal of CO₂ from the exhaust of major combustion engines for example at ships, especially given that scrubbers already are used at ships to remove e.g. sulfur dioxide (SO₂) from flue gases.

In a CO₂-scrubbing system, a scrubbing solution takes up the carbon dioxide from the flue gas in a scrubber. Typically, the scrubbing of the flue gas uses an alkaline, aqueous liquid. In an alkaline, aqueous liquid, CO₂ will dissolve and partly be hydrolyzed into carbonic acid (H₂CO₃). Given the alkaline pH, formed carbonic acid (H₂CO₃) will be shifted into hydrogen carbonate (HCO₃⁻) and/or carbonate (CO₃²⁻), as outlined below.

CO₂ **+** H₂O **=>** H₂CO₃

H₂CO₃ + OH⁻ **=>** HCO₃⁻ + H₂O

HCO₃⁻ **+** OH⁻ => CO₃²⁻ + H₂O

The technology being previously primarily developed for this process involves the use of aqueous amines, e.g. aqueous mono-ethanolamine, as absorption solvent. Amine scrubbing has been used to separate carbon dioxide (CO₂) from natural gas and hydrogen since 1930.

However, CO₂ capture based on aqueous amines has not yet been used on a larger scale for CO₂ capture from coal-fired power plants, as the process is energy consuming. The technology has not been implemented in large scale because of capital costs of installing the facility and the operating costs.

Processes based on the use of alkali metal hydroxides, e.g. KOH, to provide an alkaline, aqueous scrubbing liquid has emerged an interesting alternative. In WO 2022/096644, such a process, using electrolysis in an electrolytic cell to regenerate the scrubbing liquid, is disclosed. At the anode, the decrease in pH will protonate hydrogen carbonate to form a gaseous mixture of carbon dioxide and oxygen, whereas the pH will increase at the cathode, whereby a regenerated alkaline scrubbing liquid may be withdrawn from the electrolytic cell. Whereas the process disclosed in WO 2022/096644 has been shown to be highly efficient, there is still a need for further improvements to such a process. Some improvements have been suggested in WO 2023/187143 and WO 2023/166166. Still, there is a need for further improvements.

Flue gases do apart from CO₂ typically comprise sulfur oxides (SOₓ) and nitrogen oxides (NOₓ). Further, also natural gas does typically comprise sulfur oxides (SOₓ), whereas e.g. flue gases typically comprise nitrogen oxides (NOₓ). In scrubbing such gases using an alkaline scrubbing liquid to absorb CO₂, also SOₓ and/or NOₓ may, at least partly, be absorbed and dissolved in the scrubbing liquid *inter alia* as SO₄²⁻ and NO₃⁻. Even though this provides a cleaner gas to be emitted to the atmosphere, it also poses a need to purify the scrubbing liquid before being re-circulated, in order to avoid e.g. SO₄²⁻ and NO₃⁻ accumulating in the system. Further, it would be desired to provide for separately removing SO₄²⁻ and NO₃⁻ such that may find subsequent use.

### SUMMARY

Accordingly, there is provided a method of purifying an aqueous scrubbing liquid comprising hydrogen carbonate (HCO₃⁻) and/or as carbonate (CO₃²⁻), such as a spent aqueous scrubbing liquid.

The aqueous scrubbing liquid is an alkaline, aqueous liquid with high pH. The alkaline, aqueous scrubbing liquid comprises an alkali metal cation (M⁺) and has a pH of at least 12. Typically, the alkaline, aqueous scrubbing liquid comprises a dissolved metal hydroxide (MOH). The dissolved metal hydroxide (MOH) may be one or more of dissolved potassium hydroxide (KOH), dissolved sodium hydroxide (NaOH), and dissolved lithium hydroxide (LiOH). Preferably, the first alkaline, aqueous scrubbing liquid comprises potassium hydroxide (KOH). The concentration of the metal hydroxide (MOH) in the first alkaline, aqueous scrubbing liquid may be at least 0.1 molar, such as at least 1 molar, at least 2 molar, at least 3 molar, at least 4 molar, or at least 5 molar. The concentration may be in the range 1 to 8 molar, such as in the range 2 to 7 molar. According to an embodiment, the concentration is at least 1 molar, such as more than 1 molar. Metal hydroxides (MOH), like potassium hydroxide, are more efficient additives for alkaline, aqueous scrubbing liquid, than alkali salts e.g. potassium carbonate (K₂CO₃), as they may provide a pH as high as 14. Actually, the concentration of hydroxide ions may even exceed 1.0 molar corresponding to pH of more than 14. Further, the rate limiting step in CO₂ absorption is the amount of accessible OH⁻ ions.

The aqueous scrubbing liquid comprising hydrogen carbonate (HCO₃⁻) and/or as carbonate (CO₃²⁻), such as spent aqueous scrubbing liquid, is obtained in scrubbing a gas comprising carbon dioxide (CO₂) to deplete the gas of carbon dioxide. The gas comprising carbon dioxide (CO₂) may typically result from combustion, i.e. the gas may be a flue gas or exhaust gas. Further, the method may be used for direct air capture, i.e. carbon capture in ambient air. However, also other gases comprising carbon dioxide (CO₂) may be scrubbed by the present method. An example would be to capture CO₂ in exhaust gas from a combustion engine of ship. The gas is scrubbed in a scrubber with an alkaline, aqueous scrubbing liquid to dissolve carbon dioxide in the alkaline, aqueous scrubbing liquid as hydrogen carbonate (HCO₃⁻) and as carbonate (CO₃²⁻)· Thus, an aqueous scrubbing liquid comprising hydrogen carbonate (HCO₃⁻) and carbonate (CO₃²⁻) is provided and may be withdrawn from the scrubber. This scrubbing liquid may be denoted spent. It should be noted that the term "spent" does not imply the scrubbing liquid may not absorbed further CO₂. The term is simply used to denote that some CO₂ has been absorbed by the scrubbing liquid and hence that the pH has decreased and that the amount of carbonate, be it as hydrogen carbonate (HCO₃⁻) or carbonate (CO₃²⁻), has increased. Further, a gas depleted of carbon dioxide may be withdrawn from the scrubber. As appreciated by the skilled person, scrubbers typically operate in counterflow manner, i.e. the gas flows in one direction whereas the scrubbing liquid flows in opposite direction. In scrubbing the gas in the scrubber with an alkaline, aqueous scrubbing liquid, the gas may flow in one direction, whereas the scrubbing liquid flows in opposite direction.

Furthermore, a process for scrubbing a gas comprising carbon dioxide (CO₂) to deplete the gas of carbon dioxide typically comprises means for re-generating the alkaline, aqueous scrubbing liquid. The re-generation may be performed by electrolysis of the aqueous scrubbing liquid in an electrolysis cell with an anode and a cathode. The electrolysis cell comprises two primary chambers: an anode chamber and a cathode chamber, separated by membrane. The membrane is permeable to alkali metals, such as lithium, sodium, and potassium, but has no, or low, permeability to hydrogen carbonate (HCO₃⁻) and/or to carbonate (CO₃²⁻)· Typically, the membrane is permeable only to cations. The membrane may be a cation-exchange membrane. This membrane is essential, as it permits the selective passage of ions, typically allowing only cations, e.g. potassium, to move between the chambers, thereby maintaining the integrity and efficiency of the electrochemical reactions. In the electrolytic cell, the aqueous scrubbing liquid is electrolyzed. The electrolysis increases the pH of the aqueous hydrogen carbonate solution in the cathode chamber. Further, the electrolysis depletes aqueous scrubbing liquid introduced into the anode chamber of hydrogen carbonate (HCO₃⁻) by decreasing the pH thereby generating carbon dioxide. Furthermore, the electrolysis generates gaseous hydrogen in the cathode chamber and a gaseous mixture of oxygen and carbon dioxide in the anode chamber. As the increases the pH in the cathode chamber, and as the membrane is permeable to cations, an aqueous solution of metal hydroxide (MOH, e.g. KOH) is formed in the cathode chamber of the electrolytic cell.

The regenerated alkaline, aqueous scrubbing liquid, may be re-circulated back into the scrubber, ready to absorb additional carbon dioxide from incoming gas streams. This regeneration process not only restores the scrubbing capacity of the aqueous scrubbing liquid but also contributes to the system's sustainability by minimizing the need for fresh alkaline additives. The production of hydrogen gas as a by-product offers additional utility, as it can be collected and potentially utilized in other industrial processes. Through this electrochemical regeneration, the process achieves a closed-loop cycle, enhancing both the economic and environmental aspects of the carbon capture process.

The gas comprising carbon dioxide (CO₂) to be scrubbed may further comprise sulfur oxides (SOₓ) and/or nitrogen oxides (NOₓ). Such oxides may be dissolved in the scrubbing liquid *inter alia* as SO₄²⁻ and NO₃⁻.

According to a first aspect of the invention, there is provided a method for purifying an aqueous scrubbing liquid, such as a spent aqueous scrubbing liquid, comprising dissolved alkali metal cations (M⁺), hydrogen carbonate ions (HCO₃⁻), and sulfate ions (SO₄²⁻). The pH of the aqueous scrubbing liquid to be purified is in the range 7.0 to 9.0. The method comprises the step of:
- filtering the aqueous scrubbing liquid in a first filtration step to provide a first permeate, the relative content of sulfate ions (SO₄²⁻) in the first permeate being decreased, and a first retentate, the relative content of sulfate ions (SO₄²⁻) in the first retentate being increased. By applying a selective filtration step sulfate (SO₄²⁻) and other divalent anions may be removed, whereas most of the hydrogen carbonate ions (HCO₃⁻) being monovalent remains in the permeate. This implies that the ratio of carbonate ions (HCO₃⁻) to sulfate ions (SO₄²⁻) is decreased in the first retentate, whereas it is increased in the first permeate. Thus, the relative content of sulfate ions (SO₄²⁻) in the first permeate is decreased, and the relative content of sulfate ions (SO₄²⁻) in the first retentate is increased. By applying such a step, accumulation of sulfate ions (SO₄²⁻) in the aqueous scrubbing liquid may be avoided.

Furthermore, the method may further comprise the step of concentrating the first retentate, such as by filtration. By concentrating the first retentate, it may become easier to isolate e.g. potassium sulfate (K₂SO₄) therefrom by e.g. crystallization. Isolated potassium sulfate (K₂SO₄) may find use e.g. as fertilizer. Further, by concentrating the first retentate by filtration, an essentially pure stream of water may be obtained, which may be used for dilution and/or as makeup, e.g. in a cathode chamber of the electrolysis cell.

Typically, a first filter is used the first filtration step. In order to provide the desired selectivity, the first filter may be a membrane filter. The first filter is designed to selectively remove divalent anions, e.g. sulfate ions (SO₄²⁻), from the aqueous scrubbing liquid. It typically utilizes a nanofiltration membrane with a pore size that allows monovalent ions, such as hydrogen carbonate ions, to pass through while retaining divalent ions like sulfate ions. The membrane filter in this first filtration step is chosen to withstand the chemical environment of the scrubbing liquid and maintain high selectivity and permeability.

According to an embodiment, the first filtration step is a nanofiltration step using a first porous membrane. The first porous membrane may have a pore size in the range 1 to 10 nm to provide the desired selectivity. The first porous membrane may reject at least 95% MgSO₄, such at least 99% of 2000 ppm MgSO₄ at 5 or 9 bar and 25°C. According to an alternative embodiment, the first filtration step may be a nanofiltration or ultrafiltration step using a first porous membrane.

Further, in order to minimize the loss of hydrogen carbonate and carbonate with the first retentate, i.e. improving the selectivity, the pH of the aqueous scrubbing liquid to be filtered in the first filtration step should be in the range 7.0 to 9.0. Preferably, the pH of the aqueous scrubbing liquid to be filtered in the first filtration step is in the range 7.5 to 8.5. At higher pH, some carbonate will be present, as hydrogen carbonate is deprotonated and shifted towards carbonate. Given that carbonate is a divalent anion, this will impair the selectivity. It should be noted that the present method is applicable also to aqueous scrubbing liquids with higher, or lower pH. For such aqueous scrubbing liquids, the pH may simply be adjusted before the filtering step, such as be adding e.g. an acid, or a base.

Depending on how the scrubber and an electrolysis cell used in re-generating aqueous scrubbing liquid is operated, it may be necessary to adjust, e.g. to decrease, the pH of the aqueous scrubbing liquid before the first filtration step. As the pH is decreased in an anode chamber of an electrolysis cell, it may be desired to withdraw aqueous scrubbing liquid for the first filtration step from the anode chamber, rather directly form the scrubber. However, the aqueous scrubbing liquid for the first filtration step could be withdraw from other positions in the systems. As an example, it may be withdrawn from an intermediate chamber of an electrolysis cell.

The temperature of the aqueous scrubbing liquid to be purified, i.e. filtered in the first filtration step, may be in the range 15 to 90°C, such as 20 to 70°C. By increasing the temperature, the retention may be affected, e.g. decreased. According to one embodiment, the temperature of the aqueous scrubbing liquid to be purified, i.e. filtered in the first filtration step, is in the range 30 to 60°C. Further, the dissolved alkali metal cations (M⁺) typically comprises potassium (K⁺) as potassium hydroxide may be used in providing the alkaline aqueous scrubbing liquid used in the scrubber.

Furthermore, the aqueous scrubbing liquid to be purified, i.e. filtered in the first filtration step, may comprise 5.0 to 100 millimolar sulfate ions (SO₄²⁻), and/or 0.1 to 6 molar of hydrogen carbonate ions (HCO₃⁻) and carbonate ions (CO₃²⁻)· In some embodiments, the aqueous scrubbing liquid to be purified is diluted before being filtered. By diluting the aqueous scrubbing liquid, the risk for precipitation of e.g. hydrogen carbonate and/or carbonate ions may be lowered.

According to an embodiment, the present method further comprises the steps of:
- increasing the pH of the first permeate; and
- filtering the first permeate with increased pH in a second filtration step to provide a second permeate and a second retentate. By increasing the pH, at least some hydrogen carbonate ions (HCO₃⁻) are deprotonated to carbonate ions (CO₃²⁻), i.e. the hydrogen carbonate/ carbonate equilibrium is shifted towards carbonate ions (CO₃²⁻)· Whereas carbonate ions (CO₃²⁻) are divalent, nitrate ions (NO₃⁻) are monovalent. Hence, carbonate ions (CO₃²⁻) may be selectively filtered of from an aqueous scrubbing liquid further comprising nitrate ions (NO₃⁻). This implies that the ratio of carbonate ions (CO₃²⁻) to nitrate ions (NO₃⁻) is increased in the second retentate, whereas it is decreased in the second permeate. Thus, the relative content of carbonate ions (CO₃²⁻) in the second permeate are decreased by the filtration step. Further, the relative content of carbonate ions (CO₃²⁻) in the second retentate are increased.

Typically, a second filter is used the second filtration step. The second filter is employed after the pH adjustment of the first permeate and is used to separate carbonate ions (CO₃²⁻). The second filter may be a nanofiltration membrane or a reversed osmosis membrane, depending on the specific requirements of the process. The goal of this filtration is to achieve a permeate that has low carbonate ion (CO₃²⁻) content and which is suitable to recover nitrate ions (NO₃⁻) from the first permeate. The membrane filter used in the second filtration step is selected to optimize the rejection of carbonate ions. Both filters are integral to the system's ability to manage ion concentrations effectively, facilitating the recovery and reuse of the alkaline scrubbing liquid in a sustainable manner.

In order to provide the desired selectivity, the second filter may according to an embodiment be a membrane filter. The second filtration step may thus be a nanofiltration step, or a reversed osmosis step, using a second porous membrane. The second porous membrane may have a pore size of up to 10 nm, such as of up to 5 nm, to provide the desired selectivity. The second porous membrane may reject at least 90% NaCl, such as at least 98% of 2000 ppm NaCl at 9 or 16 bar and 25°C.

Further, in order to minimize the loss of hydrogen carbonate with the second permeate, i.e. improving the selectivity, the pH of the first permeate to be filtered in the second filtration step is to be increased. The pH may be increased by adding hydroxide ions, e.g. in the form of KOH, to the first permeate. The pH of the first permeate with increased pH to be filtered in the second filtration step, may be in the range 8.5 to 11.5, such as in the range 9.0 to 11.0. Whereas a higher pH may increase the selectivity further, it also requires more e.g. KOH to achieve the high pH.

The temperature of the first permeate with increased pH to be further purified, i.e. filtered in the second filtration step, may be in the range 15 to 90°C, such as 20 to 70°C. By increasing the temperature, the retention may be affected, e.g. decreased. According to one embodiment, the temperature of the first permeate with increased pH to be further purified, i.e. filtered in the second filtration step, is in the range 30 to 60°C. Further, the first permeate to be further purified, i.e. filtered in the second filtration step is typically diluted before being filtered. The first permeate to be further purified may comprise 1.0 to 20 millimolar nitrate ions (NO₃⁻), and/or 0.01 to 0.6 molar of hydrogen carbonate ions (HCO₃⁻) and carbonate ions (CO₃²⁻).

In order to facilitate the second filtration step, the method may further comprise the step of diluting the first permeate before the second filtration step. By diluting the first permeate, it may become easier to efficiently filtrate the first permeate. Further, the risk for precipitation of e.g. hydrogen carbonate and/or carbonate ions is lowered. Furthermore, the method may further comprise the step of concentrating the second permeate, such as by filtration. By concentrating the second permeate, it may become easier to isolate e.g. potassium nitrate (KNO₃) therefrom by e.g. crystallization. Isolated potassium nitrate (KNO₃) may find use e.g. as fertilizer. Further, by concentrating the second permeate by filtration, an essentially pure stream of water may be obtained, which may be used for dilution and/or as makeup, e.g. in a cathode chamber of the electrolysis cell. Alternatively, the counter ion, e.g. potassium (K⁺), may be recycled by feeding the second permeate to a cathode chamber of an electrolysis cell in which the nitrate ions (NO₃⁻) may be reduced to form nitrogen gas (N₂).

According to an embodiment, the aqueous scrubbing liquid to be purified is obtained by withdrawing an aqueous scrubbing liquid from a method of scrubbing a gas comprising carbon dioxide (CO₂) to deplete the gas of carbon dioxide. In such a method, an alkaline, aqueous scrubbing liquid is typically used, as has been previously described (cf. e.g. EP 3 995 204 B1 to the present applicant). Further, an electrolysis cell may be used to re-generate the aqueous scrubbing liquid to provide an alkaline, aqueous scrubbing liquid. The aqueous scrubbing liquid to be purified may be withdrawn from an electrolysis cell used to re-generate the aqueous scrubbing liquid to provide an alkaline, aqueous scrubbing liquid, comprising an alkali metal cation (M⁺). As an example, the aqueous scrubbing liquid to be purified, may be withdrawn from anode chamber of the electrolysis cell. Further, if the electrolysis cell comprises more than two chambers, the aqueous scrubbing liquid to be purified, may alternatively be withdrawn from an intermediate chamber of the electrolysis cell.

According to an embodiment, the first permeate and/or the second retentate comprising hydrogen carbonate ions (HCO₃⁻) and/or carbonate ions (CO₃²⁻) may by re-circulated. By re-circulation, the carbonate ions (HCO₃⁻) and/or carbonate ions (CO₃²⁻) may be recovered as carbon dioxide, e.g. in an electrolysis cell. Further, provided that pH is alkaline, and preferably 10 or higher, the first permeate and/or the second retentate may be used as an alkaline aqueous scrubbing liquid scrubbing a gas comprising carbon dioxide to deplete the gas of carbon dioxide.

Thus, the first permeate, and/or the second retentate, may be re-circulated to an electrolysis cell, such as to an anode chamber of the electrolysis cell, used to re-generate the aqueous scrubbing liquid to provide an alkaline, aqueous scrubbing liquid. This, is beneficial as the potassium associated with the carbonate ions (HCO₃⁻) and/or carbonate ions (CO₃²⁻) may diffuse over a membrane, separating the anode chamber of the electrolysis cell from a cathode chamber of the electrolysis cell, into the cathode chamber and be associated with hydroxide formed in the cathode chamber, thereby reducing the need for potassium make up in electrolysis cell. Further or alternatively, the first permeate, and/or the second retentate, may be re-circulated to a scrubber used in scrubbing a gas comprising carbon dioxide to deplete the gas of carbon dioxide. Preferably, the first permeate, and/or the second retentate, is at last re-circulated to the electrolysis cell.

Furthermore, as already described, the second permeate may be re-circulated to the cathode chamber of the electrolysis cell.

According to a second aspect of the invention, there is provided a method for purifying an aqueous scrubbing liquid comprising dissolved alkali metal cations (M⁺), hydrogen carbonate ions (HCO₃⁻), and nitrate ions (NO₃⁻). The pH of the aqueous scrubbing liquid to be purified is in the range 7.0 to 9.0. The method comprises the step of:
- increasing the pH of the aqueous scrubbing liquid to be purified; and
- filtering the aqueous scrubbing liquid with increased pH in a filtration step to provide a permeate and a retentate. By increasing the pH, at least some hydrogen carbonate ions (HCO₃⁻) are deprotonated to carbonate ions (CO₃²⁻), i.e. the hydrogen carbonate/ carbonate equilibrium is shifted towards carbonate ions (CO₃²⁻)· Whereas carbonate ions (CO₃²⁻) are divalent, nitrate ions (NO₃⁻) are monovalent. Hence, carbonate ions (CO₃²⁻) may be selectively filtered of from an aqueous scrubbing liquid further comprising nitrate ions (NO₃⁻). This implies that the ratio of carbonate ions (CO₃²⁻) to nitrate ions (NO₃⁻) is increased in the retentate, whereas it is decreased in the permeate. Thus, the relative content of carbonate ions (CO₃²⁻) in the permeate are decreased by the filtration step. Further, the relative content of carbonate ions (CO₃²⁻) in the retentate are increased.

Typically, a filter is used in the filtration step. The filter is employed after the pH adjustment of the permeate and is used to separate carbonate ions (CO₃²⁻)· The filter may be a nanofiltration membrane or a reversed osmosis membrane, depending on the specific requirements of the process. The goal of this filtration is to achieve a permeate that has low carbonate ion (CO₃²⁻) content and which is suitable to recover nitrate ions (NO₃⁻) from. The membrane filter used in the filtration step is selected to optimize the rejection of carbonate ions. The filter is integral to the system's ability to manage ion concentrations effectively, facilitating the recovery and reuse of the alkaline scrubbing liquid in a sustainable manner.

In order to provide the desired selectivity, the filter may according to an embodiment be a membrane filter. The filtration step may thus be a nanofiltration step, or a reversed osmosis step, using a second porous membrane. The porous membrane may have a pore size of up to 10 nm, such as of up to 5 nm, to provide the desired selectivity. The porous membrane may reject at least 90% NaCl, such as at least 98% of 2000 ppm NaCl at 9 or 16 bar and 25°C.

Further, in order to minimize the loss of hydrogen carbonate with the permeate, i.e. improving the selectivity, the pH of the aqueous scrubbing liquid to be filtered in the filtration step is to be increased. The pH may be increased by adding hydroxide ions, e.g. in the form of KOH, to the aqueous scrubbing liquid. The pH of the aqueous scrubbing liquid with increased pH to be filtered in the filtration step, may be in the range 8.5 to 11.5, such as in the range 9.0 to 11.0. Whereas a higher pH may increase the selectivity further, it also requires more e.g. KOH to achieve the high pH.

The temperature of the aqueous scrubbing liquid with increased pH to be purified, i.e. filtered in the filtration step, may be in the range 15 to 90°C, such as 20 to 70°C. By increasing the temperature, the retention may be affected, e.g. decreased. According to one embodiment, the temperature of the aqueous scrubbing liquid with increased pH to be purified, i.e. filtered in the filtration step, is in the range 30 to 60°C. Further, the aqueous scrubbing liquid to be purified, i.e. filtered in the filtration step, may comprise 1.0 to 20 millimolar nitrate ions (NO₃⁻), and/or 0.1 to 0.6 molar of hydrogen carbonate ions (HCO₃⁻) and carbonate ions (CO₃²⁻).

In order to facilitate the filtration step, the method may further comprise the step of diluting the aqueous scrubbing liquid before the filtration step. By diluting the aqueous scrubbing liquid, it may become easier to efficiently filtrate the aqueous scrubbing liquid. Further, the risk for precipitation is lowered. Furthermore, the method may further comprise the step of concentrating the permeate, such as by filtration. By concentrating the permeate, it may become easier to isolate e.g. potassium nitrate (KNO₃) therefrom by e.g. crystallization. Isolated potassium nitrate (KNO₃) may find use e.g. as fertilizer. Further, by concentrating the permeate by filtration, an essentially pure stream of water may be obtained, which may be used for dilution and/or as makeup, e.g. in a cathode chamber of the electrolysis cell. Alternatively, the counter ion, e.g. potassium (K⁺), may be recycled by feeding the permeate to a cathode chamber of an electrolysis cell in which the nitrate ions (NO₃⁻) may be reduced to form nitrogen gas (N₂).

According to an embodiment, the aqueous scrubbing liquid is obtained by withdrawing an aqueous scrubbing liquid form a method of scrubbing a gas comprising carbon dioxide (CO₂) to deplete the gas of carbon dioxide. In such a method, an alkaline aqueous scrubbing liquid is typically used, as has been previously described (cf. e.g. EP3995204B1 to the present applicant). Further, an electrolysis cell may be used to re-generate the spent aqueous scrubbing liquid to provide an alkaline, aqueous scrubbing liquid. The aqueous scrubbing liquid to be purified may be withdrawn from an electrolysis cell used to re-generate the spent aqueous scrubbing liquid to provide an alkaline, aqueous scrubbing liquid, comprising an alkali metal cation (M⁺). As an example, the aqueous scrubbing liquid to be purified, may be withdrawn from anode chamber of the electrolysis cell. Further, if the electrolysis cell comprises more than two chambers, the aqueous scrubbing liquid to be purified, may alternatively be withdrawn from an intermediate chamber of the electrolysis cell.

According to an embodiment, the retentate comprising hydrogen carbonate ions (HCO₃⁻) and/or carbonate ions (CO₃²⁻) may by re-circulated. By re-circulation, the carbonate ions (HCO₃⁻) and/or carbonate ions (CO₃²⁻) may be recovered as carbon dioxide, e.g. in an electrolysis cell. Further, provided that pH is alkaline, and preferably 10 or higher, the retentate may be used as an alkaline aqueous scrubbing liquid scrubbing a gas comprising carbon dioxide to deplete the gas of carbon dioxide.

Thus, the retentate may be re-circulated to an electrolysis cell, such as to an anode chamber of the electrolysis cell, used to re-generate the aqueous scrubbing liquid to provide an alkaline, aqueous scrubbing liquid. This is beneficial, as the potassium associated with the carbonate ions (HCO₃⁻) and/or carbonate ions (CO₃²⁻) may diffuse over a membrane, separating the anode chamber of the electrolysis cell from a cathode chamber of the electrolysis cell, into the cathode chamber and be associated with hydroxide formed in the cathode chamber, thereby reducing the need for potassium make up in electrolysis cell. Further or alternatively, the retentate may be re-circulated to a scrubber used in scrubbing a gas comprising carbon dioxide to deplete the gas of carbon dioxide. Preferably, the retentate is at last re-circulated to the electrolysis cell. Furthermore, as already described, the permeate may be re-circulated to the cathode chamber of the electrolysis cell.

### BRIEF DESCRIPTION OF THE DRAWINGS

These and other aspects, features and advantages of which the invention is capable of will be apparent and elucidated from the following description of embodiments of the present invention, reference being made to the accompanying drawings, in which:
**Fig.** 1 shows a general process scheme according to an embodiment for purifying an aqueous scrubbing liquid, comprising dissolved alkali metal cations (M⁺), hydrogen carbonate ions (HCO₃⁻), and sulfate ions (SO₄²⁻);
**Fig.** 2 shows a general process scheme according to an embodiment for purifying an aqueous scrubbing liquid, comprising dissolved alkali metal cations (M⁺), hydrogen carbonate ions (HCO₃⁻), and sulfate ions (SO₄²⁻);
**Fig. 3** shows a general process scheme for scrubbing a gas comprising carbon dioxide in a scrubber with an alkaline, aqueous scrubbing liquid;
**Fig. 4** shows a process scheme general process scheme according to an embodiment for purifying an aqueous scrubbing liquid and for re-generating potassium hydroxide (KOH) from dissolved potassium hydrogen carbonate (KHCO₃) in an electrolytic cell;
**Fig. 5** shows a general process scheme according to an embodiment for purifying an aqueous scrubbing liquid, comprising dissolved alkali metal cations (M⁺), hydrogen carbonate ions (HCO₃⁻), and nitrate ions (NO₃⁻)

### DETAILED DESCRIPTION

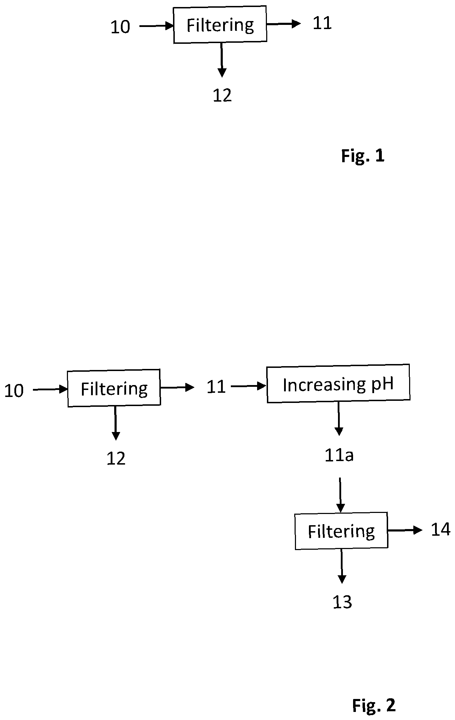

**Fig. 1** provides a schematic overview of the initial purification step in the process for treating an aqueous scrubbing liquid obtained from scrubbing a gas comprising carbon dioxide. The scrubbing liquid 10, which comprises dissolved alkali metal cations (M⁺), such as potassium (K⁺), hydrogen carbonate ions (HCO₃⁻), and sulfate ions (SO₄²⁻), is subjected to a first filtration step to provide a first permeate 11 and a first retentate 12. The filtration step selectively decreases the relative content of divalent anions, such as sulfate ions (SO₄²⁻), in the first permeate 11 while concentrating them in the first retentate 12. The first permeate 11, now enriched with hydrogen carbonate ions, may be re-circulated to, or be subject to a second filtration step (cf. Fig. 2), ensuring that the accumulation of sulfate ions in the system is mitigated, thereby enhancing the efficiency and prolonging the operational lifespan of the scrubbing system.

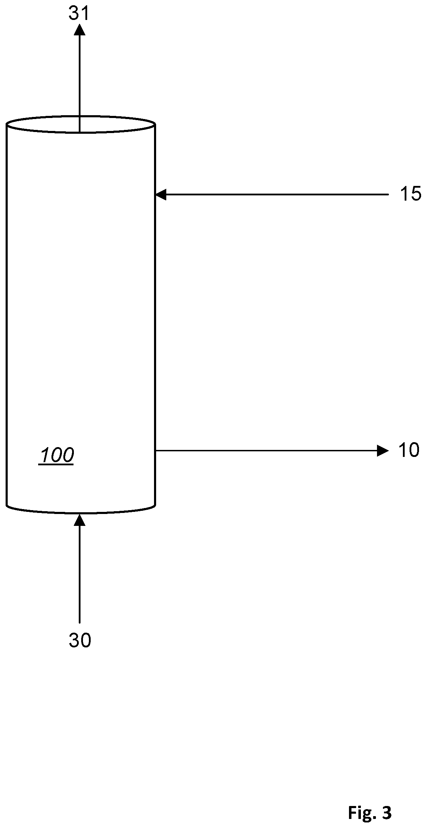

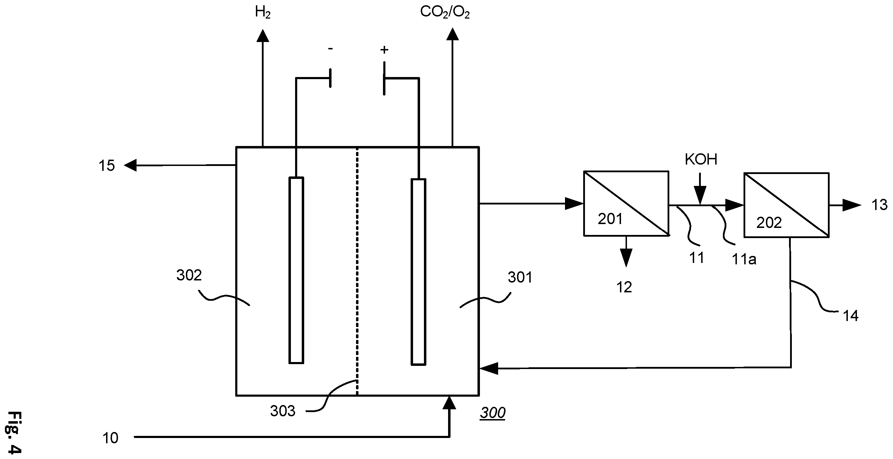

**Fig. 2** provides a schematic overview of a second filtration step in the purification process following the first filtration step depicted in Fig. 1. After the first permeate 11 is obtained, the pH of this permeate is increased, resulting in an adjusted permeate 11a with increased pH. This increase may be achieved by the addition of hydroxide ions, which shifts the chemical equilibrium towards carbonate ions. The permeate 11a with increased pH then undergoes a second filtration step, where divalent anions, such as carbonate ions (CO₃²⁻), are selectively removed, resulting in a second permeate 13 and a second retentate 14. The second permeate 13 represents a purified aqueous stream, now depleted of both sulfate and carbonate ions, aligning with the process requirements. The second permeate 13 represents a purified aqueous stream may be further filtered (not shown in Fig. 2) to remove e.g. nitrate (NO₃⁻) to provide an essentially pure aqueous stream. The second retentate 14, concentrated with carbonate ions, is recirculated back into the system, either to an electrolysis cell (cf. Fig. 4) or to a scrubber (cf. Fig. 3), facilitating the recovery and reuse of valuable components and enhancing the overall sustainability of the purification process.

**Fig. 3** provides a schematic representation a scrubber 100 for continuous scrubbing a gas 30 comprising carbon dioxide (CO₂). Aqueous scrubbing liquid 10 is obtained from the scrubber 100, as the scrubber uses an alkaline, aqueous scrubbing liquid 15 to absorb carbon dioxide from the gas 30 to provide a gas 31 depleted of carbon dioxide. The aqueous scrubbing liquid 10 may be directed towards an electrolysis cell 300 (cf. Fig. 4) for re-generation to release carbon dioxide and increase the pH of the aqueous scrubbing liquid. Re-generation of the aqueous scrubbing liquid 10 in the electrolysis cell 300 provides the alkaline, aqueous scrubbing liquid 15 used in the scrubber 100.

**Figure 4** illustrates a schematic representation of the method for purifying an aqueous scrubbing liquid 10 obtained from scrubbing a gas comprising carbon dioxide in the scrubber 100, where the gas 30 is initially scrubbed, resulting in an aqueous scrubbing liquid 10 (cf. Fig. 3). The aqueous scrubbing liquid 10 is directed into anode chamber 301 of an electrolysis cell 300 with an anode and a cathode. The electrolysis cell 300 includes the anode chamber 301 and a cathode chamber 302, where the electrochemical regeneration of the scrubbing liquid takes place. A membrane 303 separates the anode chamber 301 from the cathode chamber 302. The membrane 303 is cation selective allowing only cations, e.g. potassium, to pass over it, to diffuse from the anode chamber 301 into the cathode chamber 302. A regenerated alkaline, aqueous scrubbing liquid 15 is withdrawn from the cathode chamber 302. Further, also hydrogen gas formed in the cathode chamber 302 is withdrawn therefrom. Oxygen gas and carbon dioxide formed in the anode chamber 301 is withdrawn therefrom.

The purification method involves a series of filtration steps, each serving a specific purpose. Initially, the aqueous scrubbing liquid 10, withdrawn from the anode chamber 301, undergoes a first filtration step in a first filter 201, which is designed to selectively remove divalent anions, such as sulfate ions (SO₄²⁻), resulting in a first permeate 11, enriched with hydrogen carbonate ions, and a first retentate 12 concentrated with sulfate ions. The first filter 201 may for example be an Alfa Laval flat sheet membrane for nanofiltration (NF), such as NF99HF, having rejection of at least 99% as measured with 2000 ppm MgSO₄ at 9 bar and 25°C. The first filter 201 may have pore sizes down to 300 Dalton, corresponding to 1 to 10 nm. Following this, the pH of the first permeate 11 is increased, utilizing hydroxide ions (e.g. aqueous KOH), resulting in a permeate 11a with increased pH. This permeate 11a with increased pH is subsequently subjected to a second filtration step in a second filter 202. The second filter 202 may for example be an Alfa Laval flat sheet membrane for reversed osmosis (RO), such as RO90 or RP99, having a polyester based support material, or RO98 pHt, having a polypropylene based support material. RO90 has rejection of at least 90% as measured with 2000 ppm NaCl at 9 bar and 25°C, whereas RO98 and RO99 have a rejection of at least 98% as measured with 2000 ppm NaCl at 16 bar and 25°C. The purpose of the second filtration is to selectively remove divalent anions, such as carbonate ions (CO₃²⁻), yielding a second permeate 13 that is further purified and a second retentate 14 that contains a concentrated amount of carbonate ions.

As shown in Fig. 4 the second retentate 14 may be recirculated back into the electrolysis cell 300. Alternatively, it may be recirculated back into the scrubber 100 (not shown in Fig. 4). This allows for the recovery and reuse of valuable components and contributing to the overall efficiency of the purification process.

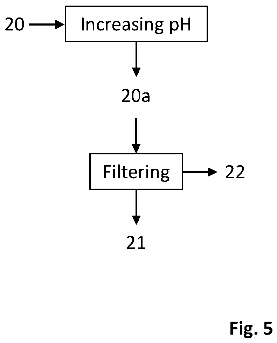

**Figure 5** illustrates a purification process according to an alternative embodiment. Initially, an aqueous scrubbing liquid 20, comprising dissolved alkali metal cations, such as potassium (K⁺), hydrogen carbonate ions (HCO₃⁻), and nitrate ions (NO₃⁻), undergoes an increase in pH, resulting in an aqueous scrubbing liquid 20a with increased pH. This pH adjustment is achieved by the addition of hydroxide ions, shifting the equilibrium towards carbonate ions (CO₃²⁻), which are key to the subsequent filtration process. The aqueous scrubbing liquid 20a with increased pH is then subjected to a filtration step specifically designed to selectively remove divalent anions, such as carbonate ions (CO₃²⁻)· This results in a permeate 21, which is a purified aqueous stream with a reduced content of carbonate ions (CO₃²⁻), aligning with the process requirements for reuse or discharge. Simultaneously, the filtration produces a retentate 22, enriched with carbonate ions (CO₃²⁻), which may be recirculated back into the system. This recirculation can occur either towards the electrolysis cell 300 or the scrubber 100, facilitating the recovery and reuse of valuable components, thereby enhancing the overall efficiency and sustainability of the purification process. This method ensures that the scrubbing liquid maintains its effectiveness in capturing carbon dioxide and other impurities, supporting the continuous operation of the scrubbing system.

### EXAMPLES

An experimental solution was prepared by mixing deionized (DI) water with standard salts; KHCO3, K2CO3, KNO3 and/or K2SO4. For each experiment, 5 L solution was prepared with the specified salt concentrations. A small sample (~200 mL) of each experimental solution was collected for analysis.

Membrane screening tests were performed on an Alfa Laval TestUnit M20 filtration system. The membranes tested were Alfa Laval RO99, RO98, RO90pHt, NF99, NF and/or UF1 flat sheet membranes. All the membranes to be tested in a specific experiment were mounted together in the LabStak module of the TestUnit, with the most closed membranes mounted closest to the inlet of the experimental solution. The assembly was performed according to Alfa Laval LabStak instructions, enabling the retentate of the first membrane to be led to the second membrane, and so on, while the permeat would be led through individual hoses to be collected separately.

The experiments were started by first filling and flushing the system with DI water. Subsequently, the tank was drained and filled with the experimental solution. First, the flow was slowly increased to approximately 50% of pump capacity. Afterwards, the pressure was slowly increased until a permeate flow could be observed from all the membranes. The experiment ended when enough permeate sample had been collected from all the membranes. The shut-down involved a slow decrease of first the pressure and subsequently the flow. A sample of the experimental solution after experiment end was collected for analysis. Then the solution was drained and the system was flushed with water multiple times.

The samples collected were analysed for pH, conductivity and concentrations of the relevant salts. Based on the concentrations, the retention (%) could be determined. The retention of the relevant salts is shown in Table 1-3 below.

**Table 1 - Carbonate/Bicarbonate ion retention.**

| **Total carbonate retention** | **pH 8.5** | **pH 9.7** |
|---|---|---|
| Membrane NF | 46 % | 66% |
| Membrane RO98 | 89 % | 97% |

As can be seen in **Table** 1, the carbonate/bicarbonate ion retention is pH dependent. The retention may be increased by increasing the pH, which will shift the carbonate/bicarbonate equilibrium towards carbonate. Without being bound to any theory, table 1 shows that carbonate is more retained than bicarbonate. In view of the pKa values of carbonic acid, it is expected that the difference in retention between pH 8 and 10 will be even higher.

**Table 2 - Ion retention at pH 8.5 (Membrane NF)**

| **Ionic species** | **Retention** |
|---|---|
| Nitrate | 0% |
| Sulphate | 90% |
| Total Carbonate | 46% |

**Table 3 - Ion retention pH 9.7 (Membrane RO98)**

| **Ionic species** | **Retention** |
|---|---|
| Nitrate | 73 % |
| Sulphate | 97 % |
| Total Carbonate | 97% |

As can be seen from **Tables 2** and **3,** the relative content of sulfate ions, nitrate ions (NO₃⁻), and carbonate ions (CO₃²⁻), respectively, in an aqueous solution may be selectively affected by filtration. By controlling the pH, the relative content of sulfate ions in the permeate may be decreased in a first step and the relative content of nitrate ions (NO₃⁻) in the retentate may be decreased in a second step to provide an aqueous solution with increased relative content of carbonate ions (CO₃²⁻).

## Claims

1. A method of purifying an aqueous scrubbing liquid (10), comprising dissolved alkali metal cations (M⁺), hydrogen carbonate ions (HCO₃⁻), and sulfate ions (SO₄²⁻), wherein the pH of the aqueous scrubbing liquid is in the range 7.0 to 9.0, the method comprising the step of:
- filtering the aqueous scrubbing liquid (10) to be purified in a first filtration step to provide a first permeate (11), the relative content of sulfate ions (SO₄²⁻) in the first permeate (11) being decreased, and a first retentate (12), the relative content of sulfate ions (SO₄²⁻) in the retentate (12) being increased.

2. The method according to claim 1, wherein:
- the pH of the aqueous scrubbing liquid (10) to be purified is in the range 7.5 to 8.5; and/or
- the temperature of the aqueous scrubbing liquid (10) to be purified is in the range 15 to 90°C, such as 20 to 70°C; and/or
- the dissolved alkali metal cations (M⁺) comprises potassium (K⁺)

3. The method according to claim 1 or 2, wherein the aqueous scrubbing liquid (10) comprises 5.0 to 100 millimolar sulfate ions (SO₄²⁻), and/or 0.1 to 6.0 molar of hydrogen carbonate ions (HCO₃⁻) and carbonate ions (CO₃²⁻).

4. The method according to any one of claims 1 to 3, wherein the first filtration step is a nanofiltration step using a first porous membrane; preferably the first porous membrane has a pore size in the range 1 to 10 nm.

5. The method according to any one of claims 1 to 4, wherein the aqueous scrubbing liquid (10) further comprises nitrate ions (NO₃⁻), and wherein the method further comprises the steps of:
- increasing the pH of the first permeate (11), such as by adding hydroxide ions (e.g. in the form of KOH) to it; and
- filtering the first permeate (11a) with increased pH in a second filtration step to provide a second permeate (13), the relative content of carbonate ions (CO₃²⁻) in the second permeate (13) being decreased, and a second retentate (14), the relative content of carbonate ions (CO₃²⁻) in the second retentate (14) being increased.

6. The method according to claim 5, wherein:
- the pH the first permeate (11a) with increased pH is in the range 8.5 to 11.5, such as in the range 9.0 to 11.0;
- the temperature of pH the first permeate (11a) with increased pH is in the range 15 to 90°C, such as 20 to 70°C;
- the first permeate comprises (11) 1.0 to 20 millimolar nitrate ions (NO₃⁻), and/or 0.01 to 0.6 molar of hydrogen carbonate ions (HCO₃⁻) and carbonate ions (CO₃²⁻).

7. The method according to claim 5 or 6, wherein the second filtration step is a nanofiltration step, or a reversed osmosis step, using a second porous membrane; preferably the second porous membrane has a pore size of up to 10 nm, such as of up to 5 nm.

8. The method according to any one of claims 5 to 7, wherein the method further comprises the steps of:
- diluting the first permeate (11) before the second filtration step; and/or
- concentrating, such as by filtration, the second permeate (13).

9. The method according to any one of claims 1 to 8, wherein
- the aqueous scrubbing liquid (10) is withdrawn from an electrolysis cell (300), such as from an anode chamber (301) of the electrolysis cell (300), used to re-generate the aqueous scrubbing liquid (10) to provide an alkaline, aqueous scrubbing liquid (15), comprising an alkali metal cation (M⁺); and wherein
- the first permeate (11), or the second retentate (14), is re-circulated.

10. The method according to claim 9, wherein the first permeate (11), and/or the second retentate (14), is re-circulated to the electrolysis cell (300), and/or to a scrubber (100) used in scrubbing a gas (30) comprising carbon dioxide to deplete the gas (30) of carbon dioxide; preferably the first permeate (11), and/or the second retentate (14), is re-circulated to the electrolysis cell (300).

11. A method of purifying an aqueous scrubbing liquid (20), comprising dissolved alkali metal cations (M⁺), hydrogen carbonate ions (HCO₃⁻), and nitrate ions (NO₃⁻), wherein the pH of the aqueous scrubbing liquid is in the range 7.0 to 9.0, the method comprising the steps of:
- increasing the pH of the aqueous scrubbing liquid (20), such as by adding hydroxide ions (e.g. in the form of KOH); and
- filtering the aqueous scrubbing liquid (20a) with increased pH in a filtration step to provide a permeate (21), the relative content of carbonate ions (CO₃²⁻) in the permeate (21) being decreased, and a retentate (22), the relative content of carbonate ions (CO₃²⁻) in the retentate (22) being increased.

12. The method according to claim 11, wherein:
- the pH of the aqueous scrubbing liquid (20) with increased pH is in the range 8.5 to 11.5, such as in the range 9.0 to 11.0;
- the temperature of the aqueous scrubbing liquid (20) with increased pH is in the range 15 to 90°C, such as 20 to 70°C;
- the aqueous scrubbing liquid (20) comprises 1.0 to 20 millimolar nitrate ions (NO₃⁻), and/or 0.01 to 0.6 molar of hydrogen carbonate ions (HCO₃⁻) and carbonate ions (CO₃²⁻).

13. The method according to claim 11 or 12, wherein the filtration step is a nanofiltration step, or a reversed osmosis step, using a porous membrane; preferably the porous membrane has a pore size of up to 10 nm, such as of up to 5 nm.

14. The method according to any one of claims 11 to 13, wherein the method further comprises the steps of:
- diluting the aqueous scrubbing liquid (20) before the filtration step; and/or
- concentrating, such as by filtration, the permeate (21).

15. The method according to any one of claims 11 to 14, wherein
- the aqueous scrubbing liquid (20) is withdrawn from an electrolysis cell (300), such as form an anode chamber (301) of the electrolysis cell (300), used to re-generate the aqueous scrubbing liquid (20) to provide an alkaline, aqueous scrubbing liquid (15), comprising an alkali metal cation (M⁺); and wherein
- the retentate (22) is re-circulated;
preferably, the retentate (20) is re-circulated to the electrolysis cell (300), such as to the anode chamber (301) of the electrolysis cell (301), and/or to a scrubber (100) used in scrubbing a gas (30) comprising carbon dioxide to deplete the gas (30) of carbon dioxide.
